# EUROPEAN PATENT SPECIFICATION

(11) **EP 2 917 526 B1**
(45) Date of publication and mention of the grant of the patent: **07.06.2017**
(21) Application number: 13779246.1
(22) Date of filing: 25.09.2013
(51) Int. Cl.: F01N 3/20, F01N 3/28, F01N 13/00, F01N 13/18, F02B 37/00, F02B 75/22

(54) **EXHAUST GAS PROCESSING SYSTEM FOR AN INTERNAL COMBUSTION PISTON ENGINE**
ABGASBEHANDLUNGSSYSTEM FÜR EINE ZYLINDERGETRIEBENE BRENNKRAFTMASCHINE
SYSTÈME DE TRAITEMENT DE GAZ D'ÉCHAPPEMENT POUR UN MOTEUR À COMBUSTION INTERNE À PISTON

(30) Priority: 09.10.2012 FI 20126059
(43) Date of publication of application: 16.09.2015
(73) Proprietor: Wärtsilä Finland Oy, 65380 Vaasa (FI)
(72) Inventor: LUNDIN, Kaj, FI-65200 Vaasa (FI); RAIKIO, Tero, FI-65230 Vaasa (FI)
(74) Representative: Genip Oy
(86) International application number: PCT/FI2013/050929
(87) International publication number: WO 2014/057165

(56) References cited:
- EP-A1- 2 415 988
- WO-A1-2010/118845
- WO-A1-2012/028768
- US-A- 2 853 367
- US-A- 3 996 016

## Description

### Technical field

Invention relates to exhaust gas processing system for internal combustion piston engine comprising an inlet duct and outlet duct and a gas processing unit with catalyst section arranged in flow communication with the inlet duct and the outlet duct.

Invention relates also to a supercharged internal combustion piston engine, comprising a turbocharging system having at least two separate turbine stages.

### Background art

The requirements set for exhaust gas emissions of internal combustion engines become more and more stringent. In order to fulfil such requirements there are various techniques available by means of which the gaseous emissions may be controlled when the engine is running. Naturally, it is clear that the overall performance of the engine should not suffer from actions aiming at reducing the emissions. Catalysts are commonly used for initiate or accelerate chemical reactions in the exhaust gases which reduce the amount of undesired substances in the exhaust gases of an internal combustion engine. Such substances are for example nitrogen oxides, hydrocarbons such as methane, carbon oxides etc. Particularly SCR (SCR stands for Selective Catalytic Reduction) catalyst are used for converting nitrogen oxides, also referred to as NOₓ with the aid of a catalyst into diatomic nitrogen, N₂, and water, H₂O. A gaseous reductant, typically anhydrous ammonia, aqueous ammonia or urea, is added to a stream of flue or exhaust gas.

Reactions taken place in the SCR catalyst requires certain temperatures to operate and the temperature effects also to needed residence time for reaction to take place. The needed temperature depends amount other things on catalyst geometry or physical design.

EP0758714 A1 discloses an exhaust gas line of a piston engine which comprises an exhaust gas pipe line and a SCR (SCR stands for Selective Catalytic Reduction) catalyst which is arranged in a bypass pipe running parallel to the exhaust gas pipe line. The bypass pipe is regulated by an exhaust gas valve depending on the engine parameters and the operating temperature of the SCR may be influenced accordingly. Corresponding parallel coupling of SCR are shown for example in DE4310962 C1 and EP0460507 A1.

DE 10 2008061222A1 describes an internal combustion piston engine having two or more banks of cylinders, each containing one exhaust gas line and a charge air line. According to the document there is a common emission control device, particularly a catalyst arranged in connection with the engine. The emission control device is integrated into the engine architecture in order to reduce space requirements of the system.

WO 2010/118845 A1 discloses an exhaust gas aftertreatment unit having an encapsulated design. The exhaust gas aftertreatment unit is construed in a modular manner from disk-shaped components, which each receive exhaust gas aftertreatment units and which are connected to supply connections on the encapsulated side with the flow occurring in the direction of the disk plane, wherein the components are surrounded by frames that are consecutively, in particular elastically, connected and clamped to each other transversal to the disk plane.

EP 2 415 988 A1 discloses a turbocharged internal combustion engine comprising a two-stage turbocharged system. The two-stage turbocharged system comprises a low-pressure turbocharger having a first turbine and a first compressor, and a high-pressure turbocharger having a second turbine and a second compressor. The turbocharged internal combustion engine comprises further a turbine connection fluidly connecting the first turbine and the second turbine and wherein a catalyst is positioned within a catalyst section of the turbine connection.

When utilizing a catalytic emission reduction system in connection with internal combustion piston engines there are several issues to consider. Firstly, the location of the system in the exhaust gas stream more or less defines the available temperature range in which the catalyst is to operate. Typically such a catalyst should be located next to turbine section(s) of the engine i.e. quite near to the engine. Secondly, a risk of fouling and clogging is always an issue to consider, particularly in connection with engines operating with e.g. heavy fuel oil, although soot formation may take place with gas operated engines, too. Thirdly, the space requirements set of a catalytic emission reduction system are typically considerable. The general aim is to spend as little space as possible.

It is an object of the invention to provide an exhaust gas processing system for an internal combustion piston engine, which solves at least one of the above mentioned problems of prior art.

### Disclosure of the Invention

Objects of the invention are met by an exhaust gas processing system for internal combustion piston engine comprising at least two catalyst units, each catalyst unit comprising an inlet duct and outlet duct and a gas processing unit with catalyst section arranged in flow communication with the inlet duct and the outlet duct wherein the inlet duct is provided with two opposite openings at a first axis and the outlet duct is provided with two opposite openings at a second axis, and that the first and the second axes are parallel to each other and that the gas processing unit is arranged in flow communication and between the inlet duct and the outlet duct. It is characteristic to the invention that in the exhaust gas processing system at least two catalyst units are coupled with each other by the openings at their inlet ducts, the successive inlet ducts forming an inlet manifold and by the openings at their outlet duct, the successive outlet ducts forming an outlet manifold.

Objects of the invention are also met by a supercharged internal combustion piston engine, comprising a turbocharging system having at least two separate turbine stages and. It is characteristic to the invention that the supercharged internal combustion piston engine comprises an exhaust gas processing system with catalyst section arranged therein and that the exhaust gas processing system is connected between the at least two turbine stages, and that the gas processing system comprises at least two catalyst units each comprising an inlet duct and outlet duct and a gas processing unit with catalyst section arranged in flow communication with the inlet duct and the outlet duct, further the inlet duct is provided with two opposite openings at a first axis and the outlet duct is provided with two opposite openings at a second axis, and the first and the second axes are parallel to each other and that the gas processing unit is arranged in flow communication and between the inlet duct and the outlet duct and that in the exhaust gas processing system at least two catalyst units are coupled with each other by the openings at their inlet ducts, the successive inlet ducts forming an inlet manifold and by the openings at their outlet duct, the successive outlet ducts forming an outlet manifold.

The inlet duct is thus provided with two opposite openings at the ends of the inlet duct and the outlet duct is provided with two opposite openings at the ends of the outlet duct. Thus, the gas processing unit is arranged fluidly between the two openings of the inlet duct and the two openings of the outlet duct.

According to an embodiment of the invention at least one of the two opposite openings in the inlet duct and the outlet duct comprises bellows unit.

According to another embodiment of the invention at least one of the two opposite openings in the inlet duct comprises a valve.

According to another embodiment of the invention openings are provided with attachment means compatible with each other.

According to another embodiment of the invention the gas processing unit with catalyst section is a Selective Catalytic Reduction unit.

According to another embodiment of the invention in the supercharged internal combustion engine the gas processing unit is arranged on top of the engine.

According to another embodiment of the invention in the supercharged internal combustion engine the engine is a V- engine and the gas processing unit is arranged be-tween the cylinder lines of the engine.

According to another embodiment of the invention in the supercharged internal combustion engine in the exhaust gas processing system at least two catalyst units are coupled with each other by the openings at their inlet ducts, the successive inlet ducts forming an inlet manifold and by the openings at their outlet duct, the successive outlet ducts forming an outlet manifold.

According to another embodiment of the invention in the supercharged internal combustion engine the first and the second axes are arranged one above the other, so that the first axis is vertically above the second axis but they may be horizontally at different positions. Thus the inlet duct and the outlet duct may also be arranged one above the other, so that the inlet duct is vertically above the outlet duct axis and that the inlet duct and the outlet duct are horizontally at different positions.

According to another embodiment of the invention in the supercharged internal combustion engine the first and the second axes are arranged vertically one above the other and horizontally at same location. This way the inlet duct and the outlet duct may be arranged one above the other, so that the inlet duct is vertically above the outlet duct and that the inlet duct and the outlet duct are horizontally at same position

According to another embodiment of the invention in the supercharged internal combustion engine inlet manifold and the outlet manifold are coupled at their first end to a flow control device via which they are connected between the at least two turbine stages.

According to another embodiment of the invention in the supercharged internal combustion engine the turbocharging system comprises two separate turbochargers having a turbine part and a compressor part.

### Brief Description of Drawings

In the following, the invention will be described with reference to the accompanying exemplary, schematic drawings, in which
Figure 1 illustrates an internal combustion piston engine according to according to an embodiment of the invention,
Figure 2 illustrates a catalyst unit for internal combustion piston engine according to an embodiment of the invention,
Figure 3 illustrates a catalyst unit for internal combustion piston engine according to an embodiment of the invention,
Figure 4 illustrates a catalyst unit for internal combustion piston engine according to an embodiment of the invention,
Figure 5 illustrates V-type internal combustion piston engine according to an embodiment of the invention,
Figure 6 illustrates a catalyst unit for internal combustion piston engine according to an embodiment of the invention,
Figure 7 illustrates an internal combustion piston engine according to an embodiment of the invention, and
Figure 8 illustrates a catalyst unit for internal combustion piston engine according to an embodiment of the invention.

### Detailed Description of Drawings

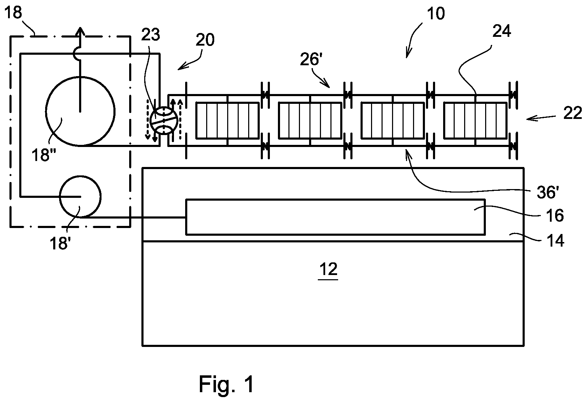

Figure 1 depicts schematically an internal combustion piston engine 10. The engine comprises various part or components which are not shown here for clarity reasons. Engine comprising an engine body 12 into which a cylinders line 14 or lines are arranged. Each cylinder of the engine is connected to at least one exhaust gas channel 16 of the engine. The exhaust gas channel 16 is in connection with a turbocharging system 18 in the exhaust gas line 20 of the engine. The exhaust gas line 20 comprises also an exhaust gas processing system 22 via which exhaust gas of the engine may be controlled to flow. The turbocharging system 18 comprises at least two separate turbine stages, in the embodiment of figure 1 a high pressure turbine 18' and a low pressure turbine 18".

The high pressure turbine 18' is arranged the upstream from the low pressure turbine 18" in the exhaust gas flow direction i.e. it operates at higher pressure level than the low pressure turbine 18". Preferably each turbine stages comprise a turbine part which is connected to a common shaft with a respective compressor part in a charge air system of the engine (not shown). However, it may be conceivable in certain circumstances to arrange the high pressure stage and low pressure stage into a common shaft with a single turbine part.

The exhaust gas processing system 22 is connected between the high pressure turbine 18' and the low pressure turbine 18' through a flow control device 23 in the embodiment of figure 1. In this embodiment the flow control device 23 is arranged to guide the exhaust gas through the exhaust gas processing system 22, the position depicted by solid lines, or to guide the exhaust gas passing by the exhaust gas processing system 20, the position depicted by dashed lines. It should be understood that the actual construction and operation of a flow control device 23 may vary according to specific needs of the installation in question. For example, the flow control device 23 may allow an operation in which only a portion of the exhaust gas is guided through the exhaust gas processing system 22 and another portion is guided to bypass the processing system, Even if shown as a unit in the figure 1 the flow control device 23 may be e.g. an aggregate of several valve units.

As can be seen in the figure 1 the exhaust gas processing system 22 is arranged on top of the engine and it is extending in the direction of the engine. This minimizes the floor space requirement of the engine.

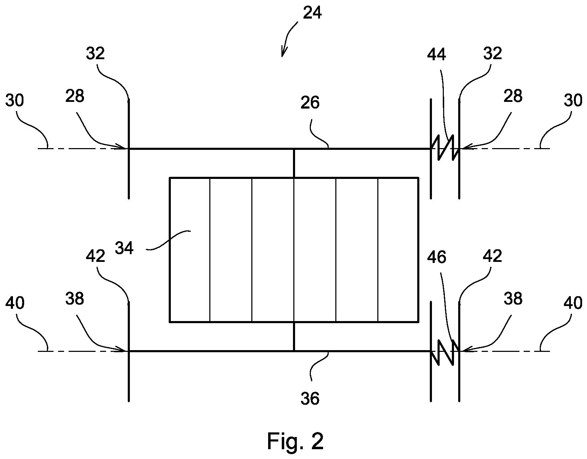

The exhaust gas processing system comprises at least two catalyst units 24 assembled successively. An embodiment of such catalyst unit 24 is illustrated in figure 2. The catalyst unit 24 comprises a gas processing unit with catalyst section 34 arranged in flow communication with an inlet duct 26 and an outlet duct 36. The inlet duct 26 is provided with two opposite openings 28 at the ends of the inlet duct 26. The inlet duct has an internal space into which the openings provide a flow communication. The openings 28 in the inlet duct 26 are arranged at similar position in respect to a first axis 30. The openings are provided with attachment means 32, such as flanges, which are compatible with each other, so that when two catalyst units are connected with each other by the attachment means 32 their first axes will coincide. Respectively, the outlet duct is provided with two opposite openings 38 at the ends of the outlet duct 36. The outlet duct has an internal space into which the openings provide a flow communication. The openings 38 in the outlet duct 26 are arranged at similar position in respect to a second axis 40. The openings are also provided with attachment means 42, which are compatible with each other.

The inlet openings 28 are arranged so that the first axis 30 runs through a center of the openings. The openings are both opening into the inlet duct 26 which is in flow communication with the catalyst unit 34. Respectively, outlet openings 38 are arranged so that the second axis 40 runs through a center of the openings. The openings are both opening into the outlet duct 36 which is in flow communication with the catalyst unit 34. The first and the second axes are parallel with each other. This way the units may be connected successively with each other.

The first 30 and the second axes 40 are parallel to each other and the gas processing unit is arranged between the axes. Thus, since the openings 28 in the inlet duct 26 are arranged at similar position in respect to a first axis 30 and the openings 38 in the outlet duct 36 are arranged at similar position in respect to a second axis 40 it is possible to arranged more than one catalyst units 24 successively by attaching opening 28 at a first end in the inlet duct 26 and opening 38 at a first end in the outlet duct 36 to opening 38 at a second end in the inlet duct 26 and opening 38 at a second end in the outlet duct 36.

Thus, in the exhaust gas processing system 22 at least two catalyst units 24 are coupled with each other by the openings 28 at their inlet ducts, the successive inlet ducts 26 forming an inlet manifold 26' for the catalyst units. The catalyst units are coupled with each other also by the openings 38 at their outlet duct 36, the successive outlet ducts forming an outlet manifold 36' or the exhaust gas processing system 22. The thus formed manifolds are connected at their first end to the flow control device 23 via which the manifolds are connectable to the turbocharging system 18 between the turbine stages 18', 18". The second ends of the manifolds may be blocked by a blind flange, for example.

In the embodiment of figure 2 one of the two opposite openings 28 in the inlet duct 26 comprises a bellows unit 44 which is arranged to operate as compensate changes in length and/or attenuate vibration. Also one of the two opposite openings 38 in the outlet duct 36 comprises a bellows unit 46. The bellows units 44, 46 absorb any thermal expansion in the inlet or outlet ducts.

The gas processing unit is according to an embodiment of the invention a selective catalytic reduction (SCR) unit, to which the position between the high and low pressure turbine stage is advantageous what comes to typical temperature range of exhaust gas.

The SCR unit comprises multiple parallel flow channels which lead from one end of the SCR unit to an opposite, second end of the unit. According to an embodiment of the invention the parallel first 30 and the second axes 40 are arranged one above the other in which case direction the flow channels of the SCR unit depart from horizontal direction. This way possible soot or other particulate matter in the exhaust gas is more likely to flow out of the channels of the SCR unit and thus decreasing clogging tendency. In order to make the unit function more effectively the direction the flow channels of the SCR unit may be vertical. In that case the structure may be such that also the first and the second axes are arranged vertically one above the other.

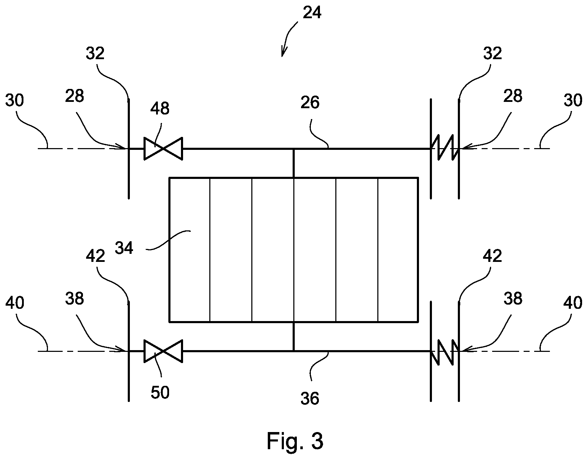

Figure 3 shows an embodiment of the catalyst unit 24 which is in other respect similar to that of figure 2 but having a valve 48 at one end of the inlet duct 26 and a valve 50 at one end of the outlet duct 36. The valves 48, 50 make it possible to changing the gas flow through a gas processing unit having several catalyst units according to figure 3 by setting the open/closed state of the valves in desired manner.

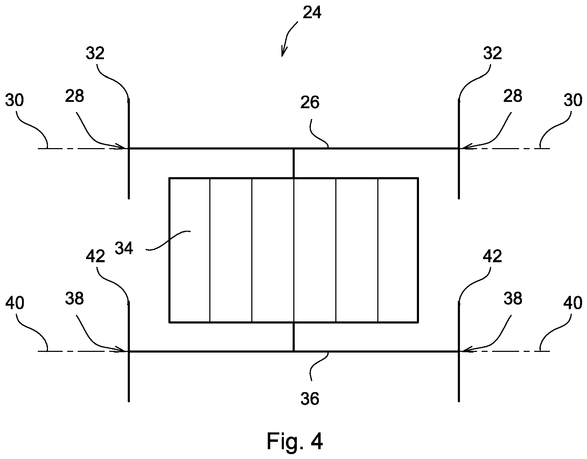

Figure 4 shows another embodiment of the catalyst unit 24 which is in other respect similar to that of figure 2 but having only attachment means 32, 42 at the ends of the inlet duct 26 and outlet duct 36. This provides particular modular structure, and gives a freedom to use a separate valve and/or bellows at the ends of the inlet and outlet ducts, at any desired position between the catalyst units 24 when forming the manifolds.

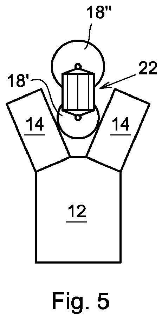

Figure 5 depicts schematically a V-type internal combustion piston engine 10. The engine comprises various part or components which are not shown here for clarity reasons. Engine comprising an engine body 12 into which a cylinders line 14 or lines are arranged in V- configuration. Each cylinder of the engine is connected to at least one exhaust gas channel 16 of the engine. The exhaust gas channel 16 is in connection with a turbocharging system 18 in the exhaust gas line 20 of the engine in similar way as in figure 1. The exhaust gas line 20 comprises also an exhaust gas processing system 22 via which exhaust gas of the engine may be controlled to flow in order subject the gas to reactions in the SCR units. The turbocharging system 18 comprises at least two separate turbine stages, in the embodiment of figure 1 a high pressure turbine 18' and a low pressure turbine 18". The exhaust gas processing system 22 is arranged between the cylinder lines of the engine so that the first and the second axes are arranged vertically one above the other. The first axis and the second axis may, however, be horizontally at different positions i.e. they need not be vertically directly one above the other. This way the height of the modules can be adapted to meet the capacity requirement of the exhaust gas processing system 22.

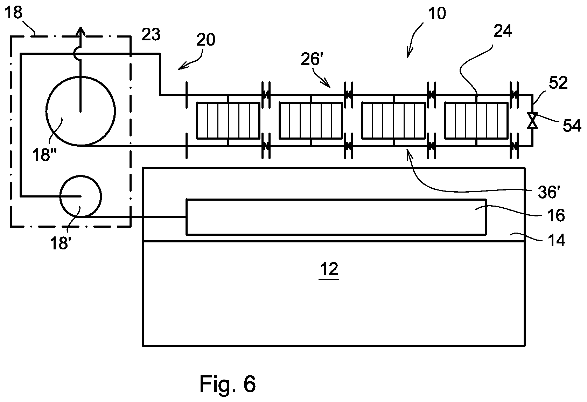

Figure 6 shows an embodiment of the invention which is based on the on in the figure 1 but has some modifications. In this embodiment there is no flow control device 23 (see figure 1) but in this embodiment the inlet and outlet manifolds 26', 36' are connected by a by-pass line 52. The by-pass line 52 is provided with a valve 54. The by-pass line and valve 54 operates so that when the valve is open a considerable amount of gas flow by-passes the catalyst units 24 and when the valve 54 is closed all the gas flows through the catalyst units 24. Thus, this embodiment allows by-passing a portion of the gas through the by-pass line depending on the dimensioning of the by-pass line in respective to the catalyst units 24.

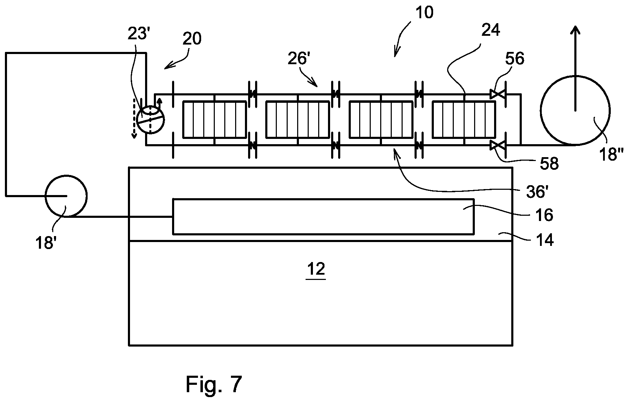

Figure 7 shows an embodiment of a supercharged engine 10 in which the high pressure turbine 18' and the low pressure turbine 18" are arranged at opposite ends of block 12 of the engine 10. The exhaust gas processing system 22 is connected between the turbines and arranged in the direction of the engine. In this embodiment the last catalyst unit 24 in the row comprises or after the last catalyst unit 24 there are arranged valves 56 and 58 at the end of the both the inlet and the outlet manifold 26', 36'. Additionally the flow control device 23' is arranged to guide the gas flow either to the inlet manifold (solid line arrow) or to the outlet manifold 36" (dotted line arrow). Now, when the valve at the other end of the manifold into which the gas is guided by the flow control device, is closed, and the other one of the valve is open, gas is arranged to flow though the catalyst units 24 in one direction. When position of the flow control device is changed to its other position and the positions of the valves 56, 58 is changed to opposite to the previous position, exhaust gas is arranged to flow though the catalyst units 24 in second direction. This way a back flush operation of the catalyst unit may be performed.

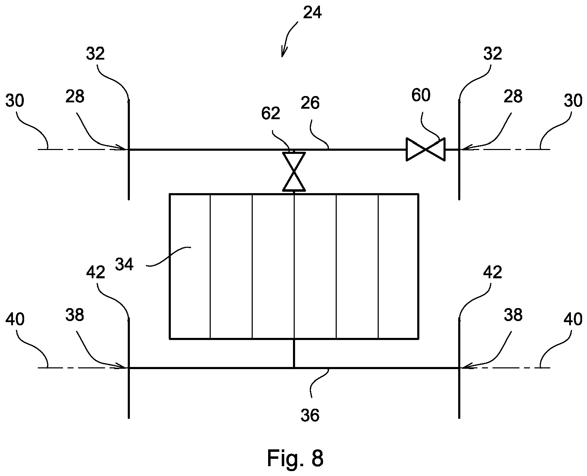

Figure 8 shows another embodiment of the catalyst unit 24 which is in other respect similar to that of figure 2 but having a valve 62 in series with the catalyst section 36 and a valve 60 at one end of the inlet duct 26. The valve 62 makes it possible to allow selection of catalyst units 24 to use in a row. The valves 60, as the valves 48 and 50 in the embodiment of figure 3, allows guiding of exhaust gas in the exhaust gas processing system 20 through various routes by closing and opening the valves according to need.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims.

## Claims

1. An exhaust gas processing system (22) for an internal combustion piston engine (10) comprising at least two catalyst units (24), each catalyst unit (24) comprising an inlet duct (26) and outlet duct (36) and a gas processing unit (34) with catalyst section arranged in flow communication with the inlet duct and the outlet duct, wherein the inlet duct is provided with two opposite openings (28) at a first axis (30) and the outlet duct (36) is provided with two opposite openings (38) at a second axis (40); wherein the first (30) and the second axes (40) are parallel to each other; and wherein the gas processing unit (34) is arranged in flow communication with and between the inlet duct (26) and the outlet duct (36), **characterized in that** in the exhaust gas processing system the at least two catalyst units (24) are coupled with each other by the openings (28) at their inlet ducts (26), the successive inlet ducts forming an inlet manifold (26'), and by the openings (38) at their outlet duct (36), the successive outlet ducts forming an outlet manifold (36').

2. An exhaust gas processing system (22) according to claim 1, **characterized in that** one of the two opposite openings in the inlet duct and the outlet duct comprises a bellows (32,42) unit.

3. An exhaust gas processing system (22) according to claim 1, **characterized in that** openings are provided with attachment means (32, 42) compatible with each other.

4. An exhaust gas processing system (22) according to anyone of the preceding claim 1 - 3, **characterized in that** the gas processing unit (34) with catalyst section is a Selective Catalytic Reduction unit.

5. A supercharged internal combustion piston engine (10), comprising a turbocharging system (18) having at least two separate turbine stages (18',18"), **characterized in that** the supercharged internal combustion piston engine (10) comprises an exhaust gas processing system (22) according to anyone of claims 1 - 4 with catalyst section arranged therein and that the exhaust gas processing system is connected between the at least two turbine stages (18',18").

6. A supercharged internal combustion engine according to claim 5, **characterized in that** the gas processing unit is arranged on top of the engine (10).

7. A supercharged internal combustion engine according to claim 5, **characterized in that** the engine is a V- engine and the gas processing unit is arranged between the cylinder lines (14) of the engine.

8. A supercharged internal combustion engine according to claim 5, **characterized in that** the inlet duct (26) and the outlet duct (36) are arranged one above the other, so that the inlet duct (26) is vertically above the outlet duct (36) axis and that the inlet duct (26) and the outlet duct (36) are horizontally at different positions.

9. A supercharged internal combustion engine according to claim 5, **characterized in that** the inlet duct (26) and the outlet duct (36) are arranged one above the other, so that the inlet duct (26) is vertically above the outlet duct (36) and that the inlet duct (26) and the outlet duct (36) are horizontally at same position.

10. A supercharged internal combustion engine according to claim 5, **characterized in that** inlet manifold (26') and the outlet manifold (36') are coupled at their first end to a flow control device (23, 23') via which they are connected between the at least two turbine stages.

11. A supercharged internal combustion engine according to claim 5, **characterized in that** the turbocharging system (18) comprises two separate turbochargers having a turbine part and a compressor part.

## Patentansprüche

1. Abgasaufbereitungssystem (22) für einen Kolben-Verbrennungsmotor (10), der mindestens zwei Katalysatoreinheiten (24) umfasst, wobei jede Katalysatoreinheit (24) einen Einlasskanal (26) und einen Auslasskanal (36) und eine Gasaufbereitungseinheit (34) umfasst, wobei der Katalysatorabschnitt in strömungstechnischer Verbindung mit dem Einlasskanal und dem Auslasskanal angeordnet ist, wobei der Einlasskanal an einer erste Achse (30) mit zwei gegenüberliegenden Öffnungen (28) versehen ist und der Auslasskanal (36) an einer zweiten Achse (40) mit zwei gegenüberliegenden Öffnungen (38) versehen ist; wobei
die erste (30) und die zweite Achse (40) parallel zueinander sind; und wobei
die Gasaufbereitungseinheit (34) in strömungstechnischer Verbindung mit und zwischen dem Einlasskanal (26) und dem Auslasskanal (36) angeordnet ist, **dadurch gekennzeichnet, dass** in dem Abgasaufbereitungssystem die mindestens zwei Katalysatoreinheiten (24) über die Öffnungen (28) an ihren Einlasskanälen (26), wobei die aufeinander folgenden Einlasskanäle einen Einlasskrümmer (26') ausbilden, und über die Öffnungen (38) an ihrem Auslasskanal (36), wobei die aufeinander folgenden Auslasskanäle einen Auslasskrümmer (36') ausbilden, miteinander gekoppelt sind.

2. Abgasaufbereitungssystem (22) nach Anspruch 1, **dadurch gekennzeichnet, dass** eine der zwei gegenüberliegenden Öffnungen in dem Einlasskanal und dem Auslasskanal einen Faltenbalgeinheit (32, 42) umfasst.

3. Abgasaufbereitungssystem (22) nach Anspruch 1, **dadurch gekennzeichnet, dass** die Öffnungen mit Befestigungsmitteln (32, 42) versehen sind, die miteinander kompatibel sind.

4. Abgasaufbereitungssystem (22) nach einem der vorhergehenden Ansprüche 1-3, **dadurch gekennzeichnet, dass** die Gasaufbereitungseinheit (34) mit dem Katalysatorabschnitt eine Einheit zur selektiven katalytischen Reduktion ist.

5. Aufgeladener Kolben-Verbrennungsmotor (10), der ein Turboladesystem (18) mit mindestens zwei separaten Turbinenstufen (18', 18") umfasst, **dadurch gekennzeichnet, dass** der aufgeladene Kolben-Verbrennungsmotor (10) ein Abgasaufbereitungssystem (22) nach einem der Ansprüche 1-4 mit einem darin angeordneten Katalysatorabschnitt umfasst und dass das Abgasaufbereitungssystem zwischen den mindestens zwei Turbinenstufen (18', 18") eingebunden ist.

6. Aufgeladener Verbrennungsmotor nach Anspruch 5, **dadurch gekennzeichnet, dass** die Gasaufbereitungseinheit auf dem Motor (10) angeordnet ist.

7. Aufgeladener Verbrennungsmotor nach Anspruch 5, **dadurch gekennzeichnet, dass** der Motor ein V-Motor ist und die Gasaufbereitungseinheit zwischen den Zylinderleitungen (14) des Motors angeordnet ist.

8. Aufgeladener Verbrennungsmotor nach Anspruch 5, **dadurch gekennzeichnet, dass** der Einlasskanal (26) und der Auslasskanal (36) übereinander angeordnet sind, derart dass der Einlasskanal (26) sich vertikal oberhalb der Achse des Auslasskanals (36) befindet und dass der Einlasskanal (26) und der Auslasskanal (36) sich horizontal an unterschiedlichen Positionen befinden.

9. Aufgeladener Verbrennungsmotor nach Anspruch 5, **dadurch gekennzeichnet, dass** der Einlasskanal (26) und der Auslasskanal (36) übereinander angeordnet sind, derart dass der Einlasskanal (26) sich vertikal oberhalb des Auslasskanals (36) befindet und dass der Einlasskanal (26) und der Auslasskanal (36) sich horizontal an der gleichen Position befinden.

10. Aufgeladener Verbrennungsmotor nach Anspruch 5, **dadurch gekennzeichnet, dass** der Einlasskrümmer (26') und der Auslasskrümmer (36') an ihrem ersten Ende mit einer Durchflussregelungsvorrichtung (23, 23') gekoppelt sind, über die sie zwischen den mindestens zwei Turbinenstufen eingebunden sind.

11. Aufgeladener Verbrennungsmotor nach Anspruch 5, **dadurch gekennzeichnet, dass** das Turboladesystem (18) zwei getrennte Turbolader umfasst, die einen Turbinenteil und einen Kompressorteil aufweisen.

## Revendications

1. Système de traitement de gaz d'échappement (22) pour moteur à combustion interne à piston (10)
comprenant au moins deux unités de catalyse (24), chaque unité de catalyse (24) comprenant une conduite d'entrée (26) et une conduite de sortie (36) et une unité de traitement de gaz (34) avec une section de catalyse disposée en communication de flux avec la conduite d'entrée et la conduite de sortie, dans lequel la conduite d'entrée est pourvue de deux ouvertures opposées (28) sur un premier axe (30) et la conduite de sortie (36) est pourvue de deux ouvertures opposées (38) sur un second axe (40) ; dans lequel
les premier (30) et second (40) axes sont parallèles l'un à l'autre et l'unité de traitement de gaz (34) est disposée en communication de flux avec et entre la conduite d'entrée (26) et la conduite de sortie (36), **caractérisé en ce que** le système de traitement de gaz d'échappement et les au moins deux unités de catalyse (24) sont couplés ensemble par les ouvertures (28) au niveau de leur conduite d'entrée (26), les conduites d'entrée successives formant un collecteur d'entrée (26'), et par les ouvertures (38) au niveau de leur conduite de sortie (36), les conduites de sortie successives formant un collecteur de sortie (36').

2. Système de traitement de gaz d'échappement (22) selon la revendication 1, **caractérisé en ce qu'**une des deux ouvertures opposées de la conduite d'entrée et de la conduite de sortie comprend un soufflet (32, 42).

3. Système de traitement de gaz d'échappement (22) selon la revendication 1, **caractérisé en ce que** les ouvertures sont pourvues de moyens de fixation (32, 42) compatibles entre eux.

4. Système de traitement de gaz d'échappement (22) selon l'une quelconque des revendications précédentes 1 à 3, **caractérisé en ce que** l'unité de traitement de gaz (34) à section de catalyse est une unité de réduction catalytique sélective.

5. Moteur à combustion interne suralimenté à piston (10), comprenant un système de turbocompresseur (18) comprenant au moins deux étages de turbine séparés (18',18"), **caractérisé en ce que** le moteur à combustion interne à piston suralimenté (10) comprend un système de traitement de gaz d'échappement (22) selon l'une quelconque des revendications 1 à 4 avec une section de catalyse disposée à l'intérieur et que le système de traitement de gaz d'échappement est connecté entre les au moins deux étages de turbine (18', 18").

6. Moteur à combustion interne suralimenté selon la revendication 5, **caractérisé en ce que** l'unité de traitement de gaz d'échappement est disposée sur le dessus du moteur (10).

7. Moteur à combustion interne suralimenté selon la revendication 5, **caractérisé en ce que** le moteur est un moteur V de traitement de gaz d'échappement et que l'unité de traitement de gaz est disposée entre les lignes de cylindre (14) du moteur.

8. Moteur à combustion interne suralimenté selon la revendication 5, **caractérisé en ce que** la conduite d'entrée (26) et la conduite de sortie (36) sont disposées l'une au-dessus de l'autre, de sorte que la conduite d'entrée (26) se situe verticalement au-dessus de l'axe de la conduite de sortie (36) et que la conduite d'entrée (26) et la conduite de sortie (36) se situent horizontalement des positions différentes.

9. Moteur à combustion interne suralimenté selon la revendication 5, **caractérisé en ce que** la conduite d'entrée (26) et la conduite de sortie (36) sont disposées l'une au-dessus de l'autre, de sorte que la conduite d'entrée (26) se situe verticalement au-dessus de la conduite de sortie (36) et que la conduite d'entrée (26) et la conduite de sortie (36) se situent horizontalement à la même position.

10. Moteur à combustion interne suralimenté selon la revendication 5, **caractérisée en ce que** le collecteur d'entrée (26') et le collecteur de sortie (36') sont couplés par leur première extrémité à un dispositif de contrôle d'écoulement (23, 23') par l'intermédiaire duquel ils sont connectés entre les au moins deux étages de turbine.

11. Moteur à combustion interne suralimenté selon la revendication 5, **caractérisée en ce que** le système de turbocompresseur (18) comprend deux turbocompresseurs séparés dotés d'un élément turbine et d'un élément compresseur.
